# EUROPEAN PATENT SPECIFICATION

(11) **EP 3 212 545 B1**
(45) Date of publication and mention of the grant of the patent: **08.09.2021**
(21) Application number: 15820315.8
(22) Date of filing: 28.10.2015
(51) Int. Cl.: B65G 39/20, B61F 9/00

(54) **DEVICE FOR CONVEYING PRODUCTS ON CARRIER UNITS.**
VORRICHTUNG ZUR FÖRDERUNG VON PRODUKTEN
DISPOSITIF POUR ACHEMINER DES PRODUITS

(30) Priority: 28.10.2014 NL 2013698
(43) Date of publication of application: 06.09.2017
(73) Proprietor: Vanderlande Industries B.V., 5466 RB Veghel (NL)
(72) Inventor: VERTOGEN, Martinus Johannes Maria, NL-5466 RB Veghel (NL); VAN VUGHT, Gregorius Maria Adrianus, NL-5466 RB Veghel (NL)
(74) Representative: Algemeen Octrooi- en Merkenbureau B.V.
(86) International application number: PCT/NL2015/050751
(87) International publication number: WO 2016/068705

(56) References cited:
- EP-A1- 1 352 855
- WO-A1-2012/033408
- ES-A1- 2 320 188

## Description

The present invention relates to a device for conveying products, comprising successive carrier units and comprising conveying means for conveying the carrier units in a conveying direction along a conveying path, wherein the conveying means comprise two guide elements extending side by side along the conveying path for supporting the successive carrier units, wherein the conveying path comprises at least horizontal bends, or at least a horizontal bend, the carrier units each comprising:
- a chassis comprising a central longitudinal girder extending in the conveying direction, and a cross girder extending transversely to the conveying direction or in other words, transversely to the longitudinal girder, which is provided at the location of or at least near an end of the longitudinal girder and which is connected thereto,
- a respective running wheel rotatably provided on the cross girder on either side of the longitudinal girder for supporting the carrier unit on a respective guide element of the guide elements and for enabling the carrier unit to roll along the conveying path,
- a respective guide wheel rotatably provided on the cross girder on either side of the longitudinal girder for guiding the carrier unit in the transverse direction along a respective guide element of the guide elements during movement of the carrier unit along the conveying path,
- a support member supported by the chassis, which comprises a supporting surface for supporting at least one product.

The present invention in particular relates to the cornering performance of the carrier units of such a device upon rounding horizontal bends in an - endless - conveying path. In practice the same perpendicular distance between two side-by-side guide elements on which the respective running wheels on either side of the longitudinal girder are supported is maintained in such horizontal bends of the endless conveying path. The term "perpendicular distance" is understood to mean a distance between the aforesaid guide elements measured along a virtual line through the centre of the bend in question. Cornering performance relates to stability and definition of carrier units upon rounding such bends. A consequence of undesirable cornering performance is, for example, undesirable noise production when carrier units round the bend.

WO2012033408 discloses a device as described in the introduction. Although this known device functions well, it appears that the cornering of a horizontal bend by the carrier units is open to improvement.

It is therefore an object of the present invention to provide a constructionally as well as economically advantageous device comprising carrier units which exhibit an improved cornering performance in horizontal bends in use.

The above object is achieved with the device according to the invention, which is characterised in that at least one guide wheel of the respective guide wheels provided on either side of the longitudinal girder is provided on the cross girder in such a manner that the guide wheel is movable to and fro in the transverse direction relative to the chassis and bears against the respective guide element under spring tension. The cross girder is rigidly connected to the longitudinal girder.

The invention is at least in part based on the insight that because of the specific configuration of the carrier units with a longitudinal girder and a cross girder provided at the location of or at least near a short end of the longitudinal girder, the cross girder, or at least a longitudinal axis thereof which extends perpendicular to the longitudinal axis of the longitudinal girder, will not intersect the centre of a bend upon rounding said bend. Since the cross girder is thus oriented slightly "obliquely" to the conveying path, more space is created between guide wheels and guide elements. The carrier units of the device according to the invention are not adversely affected by this not running smoothly because of the aforesaid spring-mounted guide wheel. The provision of such a spring-mounted guide wheel is a surprisingly simple and cost-advantageous solution to the known cornering performance problem in horizontal bends. Complex constructions or constructions in which concessions are made regarding stability or usability, for example, as known from the further prior art (to be described below), are not needed, therefore. The present invention is thus in particular advantageous in horizontal bends in the conveying path. As a result of the provision of the spring-mounted guide wheel, the position of the carrier unit on the conveying path is defined to a larger extent without concessions being made as regards the stability of the construction. The carrier units run more smoothly, resulting in a lower noise production. Because according to the invention at least one guide wheel bears against a guide element under spring load, play due to production and mounting tolerances, for example, of the carrier unit but also of the guide elements is moreover compensated, not only in bends but also in straight portions of the conveying path.

It is noted that EP 1 426 312 discloses a sorting device. Said device comprises transporting units having a cross-shaped chassis. As a result of this configuration, the relation between the distance transversely to the conveying direction between the wheels of a transporting unit and the aforesaid perpendicular distance between the guide elements will to a great extent remain the same upon rounding a horizontal bend. Due to the cross-shaped configuration of the chassis, the transporting units are relatively unstable in the horizontal plane, in particular upon cornering a horizontal bend. Furthermore, due to the cross-shaped configuration of the chassis and the resulting coupling between successive transporting units, rounding vertical bends is not possible, which reduces the usability of the device. EP 2 218 661 likewise discloses a sorting device. The successive transporting units of said device are relatively complex in construction in that they are made up of two parts that pivot relative to each other, viz. a carrier unit and a carriage. A distance, seen in the conveying direction, between two guide wheels on one side of the carriage is a compromise between the smallest bend to be cornered and the risk of tilting. DE 4131629 further discloses a conveying device. Successive transporting units of this device are complex in construction and thus costly on account of the large number of pivoting parts. Running wheels and guide wheels are connected to a drawbar of the transporting units via a hinged joint, the purpose being to improve the cornering performance. A distance seen in the conveying direction between the two guide wheels on one side of the carriage is a compromise between the smallest bend to be cornered and the risk of tilting.

Preferably, the cross girder is provided at the end of the longitudinal girder. Within the scope of the invention, the phrase "provided near one end of the longitudinal girder" is understood to mean that a distance seen in the longitudinal direction of the longitudinal girder between the end and the position at which the cross girder is provided amounts to less than 25 per cent, preferably less than 15 per cent, of the length of the longitudinal girder. If the length of the longitudinal girder at least substantially corresponds to the length of the carrier unit, the cross girder will thus be spaced from the end by at most 25 per cent, preferably at most 15 per cent, of the length of the carrier unit, seen in the longitudinal direction thereof.

Preferably, all the respective guide wheels provided on either side of the longitudinal girder are provided on the cross girder in such a manner that each guide wheel is movable to and fro in the transverse direction relative to the chassis and bears against the respective guide element under spring tension. This will result in an even smoother running and make it possible to effectively absorb jolts on both sides.

The cross girder may be made up of one integral part that extends in transverse direction on either side of the longitudinal girder. Alternatively, the cross girder may also be made up of separate parts, preferably a first part connected to the longitudinal girder on one side and a second part connected to the longitudinal girder on the other side, wherein the first and the second part are located in line with each other.

Quite preferably, the carrier unit comprises a resilient element that acts between the chassis and the at least one movable guide wheel for urging the guide wheel into rolling contact with the guide element in use. Alternatively, two guide wheels provided on either side of the longitudinal girder may be directly biased relative to each other so as to cause them to bear against the guide elements under spring tension.

It is advantageous if the at least one movable guide wheel comprises a shaft member which is connected to the cross girder so as to movable in the transverse direction, about which shaft member the wheel rotates in use, wherein the resilient element acts between the chassis and the shaft member.

The chassis preferably has a pivot arm which pivotally connects the shaft member to the cross girder, wherein the resilient element acts between the cross girder and the pivot arm. Such an embodiment is constructionally simple and robust.

The chassis of the carrier unit is provided with at least one stop element for each one of the aforesaid guide wheels that are movable in the transverse direction, which stop element functions to limit movement in the transverse direction of said guide wheel.

A smooth running is realised because the stop element comprises a damper.

Preferably, the guide elements each have an upper surface over which a running wheel of the running wheels rolls in use and against a lateral surface of which a guide wheel of the guide wheels rolls.

Preferably, each carrier unit is provided with sorting means for moving a product present on the supporting surface in a direction substantially transversely to the conveying direction, and preferably also with a driving mechanism for driving the sorting means, wherein the device comprises control means for controlling individual driving mechanisms of individual carrier units.

Quite preferably, each carrier unit of the successive carrier units comprises coupling elements at both short ends, by means of which the respective carrier unit is coupled to adjacent ones of the successive carrier units. The coupling element provided at one end is of a first kind, such as a ball joint, and the coupling element provided at the opposite end is of a second kind, such as a receiving opening for a ball joint, configured to interlock with the coupling element of the first kind. Preferably, the coupling elements of two successive carrier units prevent translation of one carrier unit relative to the other carrier unit in coupled condition and allow rotation of one carrier unit relative to the other carrier unit about the point of rotation defined by the coupling elements. As a result, the coupled successive carrier units are capable of rounding bends comprising a horizontal as well as a vertical component.

It is furthermore advantageous if each carrier unit is supported on the guide elements via its running wheels provided on the cross girder thereof and is furthermore suspended, via the coupling element provided at the end of the longitudinal girder opposite the end where the cross girder is provided, to the carrier unit of the successive carrier units that is located adjacent to said opposite end.

The present invention will now be explained in more detail by means of a description of a preferred embodiment of a device according to the present invention, in which reference is made to the following figures, in which:
Figure 1 is a strongly simplified schematic top plan view of a part of a conveying device according to the prior art, with reference to which the operation thereof can be explained;
Fig. 2 is a strongly simplified schematic top plan view of a part of a preferred embodiment of the conveying device according to the invention, with reference to which the operation thereof can be explained;
Figure 3 is an isometric view of a part of the conveying device of Fig. 2;
Figure 4 is an isometric view of a part of the conveying device of figure 2;
Figure 5 is a more detailed, partially exploded view of a part of figure 2;
Figure 6 is an isometric view of a part of another preferred embodiment of a conveying device according to the invention; and
Figure 7 is a more detailed view of a part of figure 6 showing a different state thereof.

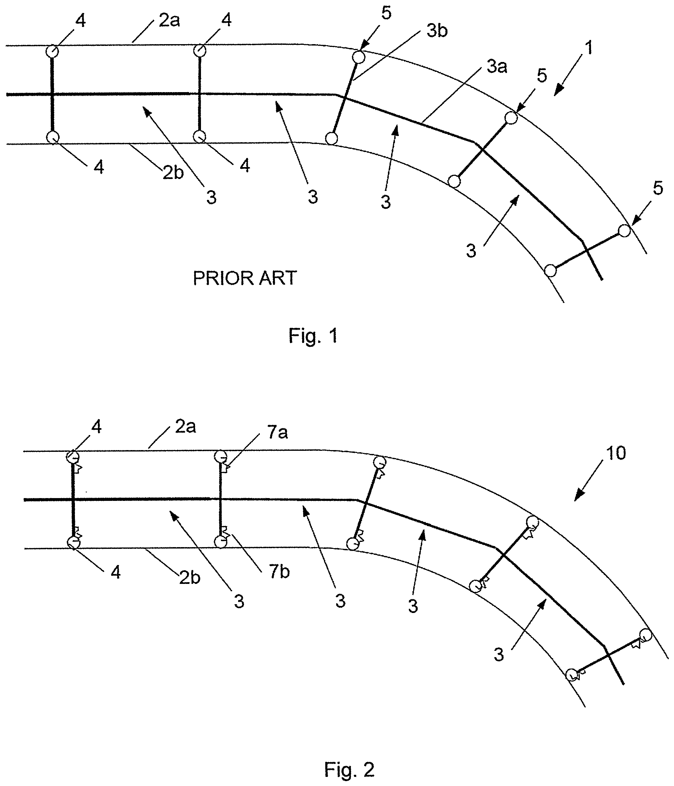

Figure 1 shows in schematic view at part of a conveying device 1 as used in the prior art inter-alia in apparatus for sorting products. The schematic view shows chassis 3 of the carrier units and guide elements 2a, 2b of the conveying means. It is known to place sorting means on said chassis, on which sorting means goods can be loaded. The sorting means move a product placed thereon transversely to the conveying direction at a pre-programmed location, so that the product is deposited from the sorting means into a fixed world collecting place. Thus products can be sorted by selectively controlling the sorting means. Known embodiments of sorting means include tilting trays, transverse conveyor belts and flat trays with shoes or beams that slide thereover. The sorting means do not form part of the subject matter of the present invention and will not be discussed or shown in more detail herein, therefore.

In the known conveying device 1, the chassis 3 are supported by support rails 2a, 2b, which are placed a fixed distance apart using cross connections (not shown) and thus extend parallel to each other along the conveying path. In order to make it possible to move the conveying device along a closed path, the support rails must follow a closed endless path. The conveying path is for that purpose built up both of straight support rails and of horizontally or vertically curved rails, better known as bends. For reasons of simple manufacture and installation the support rails are curved with a constant radius. In figures 1 and 2, only a part of said closed endless path is shown for easy reference.

In the conveying device 1, a number of successive chassis 3 of carrier units are coupled together, using coupling elements, to form a closed train. In figures 1 and 2 only a part of this a shown, again for easy reference. A chassis 3 is made up of a central longitudinal girder 3a and a cross girder 3b placed perpendicular thereto at one end one end thereof.

The movement of a chassis 3 along the support rails 2a, 2b is controlled by the coupling elements with the adjacent chassis 3 and by two guide wheels 4. The guide wheels 4 are mounted to the cross girder 3b, one on either side of the central longitudinal girder 3a. During transport through straight sections of the conveying path, the guide wheels 4 bear against one side of the support rails 2a, 2b on the same side of the central longitudinal girder 3a. It is known to place the cross girder 3b with the guide wheels 4 at or near one of the ends of the chassis 3, which will thus have a T-shape.

When the chassis 3 corners a bend, the chassis 3 form a regular polygon with their longitudinal girder 3a. The result of this is that an imaginary line perpendicular to said longitudinal girder 3a will only go through the centre of the radius of the bend if the line is drawn from the centre of the longitudinal girder 3a. Only at that position will the parts of the chassis 3 move both in the longitudinal direction of the longitudinal girder 3a and in a circular arc through the centre of the radius of the bend at that moment. Because the cross girder 3b is mounted some distance from the centre of the longitudinal girder 3a and said cross girder 3b is thus not oriented toward the centre of the radius of the bend, this does not hold for the cross girder 3b and the guide wheels 4.

The connections between the support rails 2a, 2b in the bend, on the other hand, are all oriented toward the centre of the radius so as to be able to use the same connections at straight and at curved sections of the conveying path for reasons of constructional simplicity. The distance between the support rails 2a, 2b, also known as the track gauge, is thus constant.

Because the cross girder 3b is not oriented toward the centre of the curve, it cannot span the entire distance between the support rails 2a and 2b, so that space is created between at least one of the guide wheels 4 and the support rails 2a, 2b against which said wheel runs in the straight part.

If the cross girder 3b of the chassis 3 is placed on the rear side of the chassis 3, the chassis 3 will already start to orient itself toward the bend before the guide wheels 4 have reached that bend. As a result, space is created between the guide wheels 4 and the support rails 2a, 2b already before the bend. Precisely when a chassis 3 must experience a transverse force for changing over from a rectilinear movement to a circular movement so as to follow the course of the bend, the chassis is not guided by the support rails 2a, 2b. This results in uncontrolled behaviour of the chassis 3 at this location, indicated at 5 for three carrier units in figure 1, which manifests itself in the form of vibrations, noise and wear.

Figure 2 shows a part of the preferred embodiment of a conveying device 10 according to the invention. Parts that are unchanged in comparison with the conveying device 1 are indicated by identical numerals. The invention is in part based on the understanding of the above-described problem. According to the invention, the uncontrolled movement of the chassis 3 of the carrier unit, which comprises the longitudinal girder 3a and the cross girder 3b, at the beginning of a bend is prevented by suspending the guide wheels 4 from the cross girder 3b in such a manner that they are movable in transverse direction. The guide wheels 4 are urged outward by a resilient element 7a, 7b along the entire closed path and are thus in constant contact with the support rails 2a, 2b. As a result, entering the bend will take place gradually and without any adverse effects. The support rails 2a, 2b form guide elements of the conveying means.

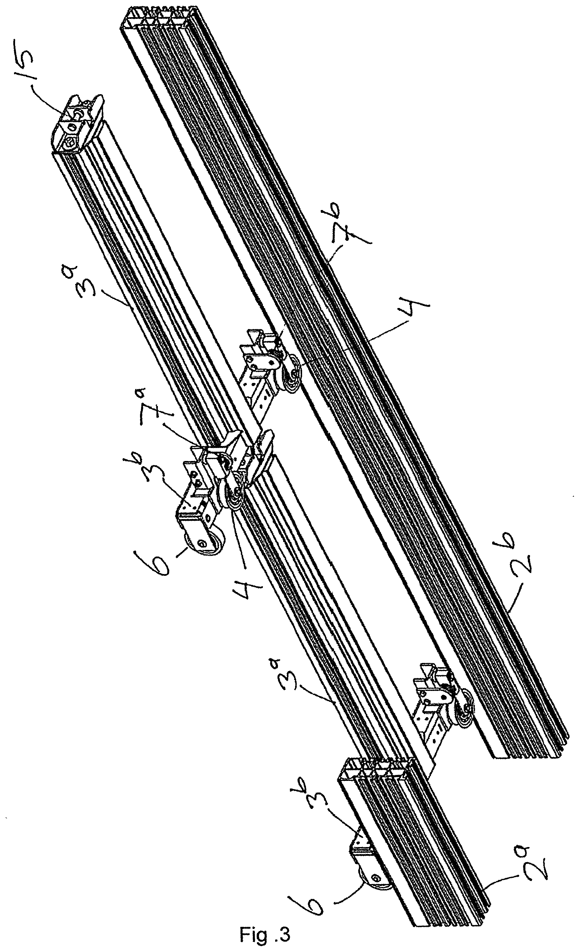

Figure 3 is an isometric view of two successive chassis 3 according to the invention. Part of the support rail 2a has been left out so as to provide a better view of the chassis 3.

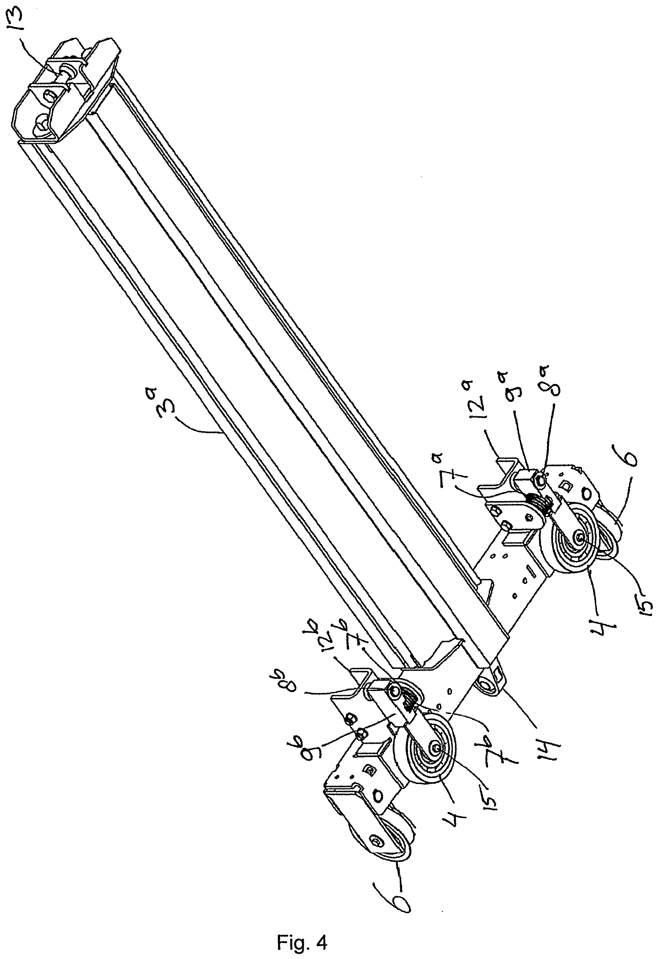

As shown in figure 3, each chassis 3 is supported by the contact between the two running wheels 6 and the upper surface of the support rails 2a and 2b and by a coupling element 13 with the chassis 3 ahead thereof. In the same manner, the chassis that follows is supported on the coupling element 14 of the chassis 3. The coupling element 14 is shown in figure 4.

The running wheels 6 are pivotally and rotatably connected to the ends of the cross girder 3b.

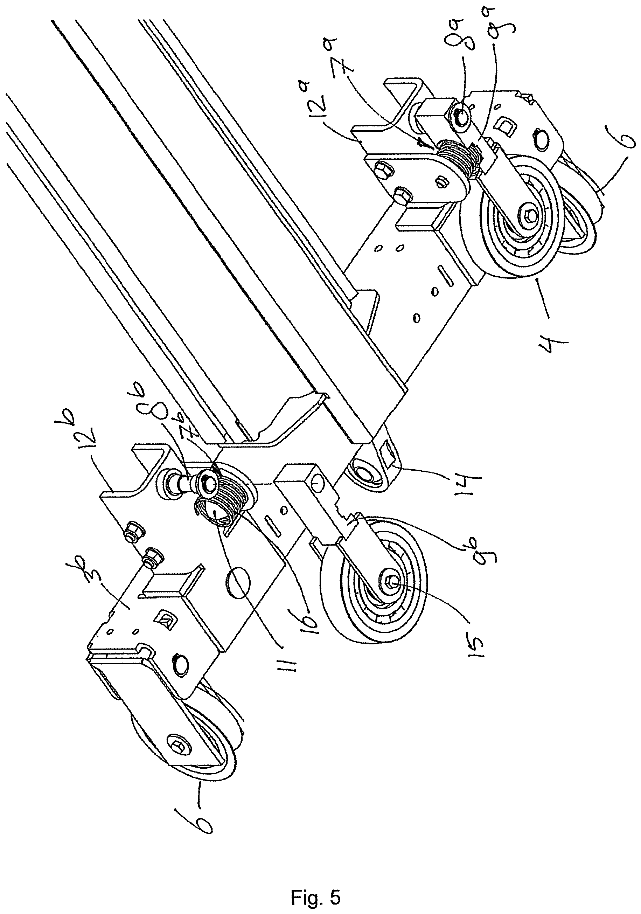

Figure 4 is an isometric view of a chassis 3. Figure 5 is an isometric view of the rear part of the chassis 3 of figure 4. In these figures, parts of the chassis 3 that have been designated before are indicated by the same numerals. They will not be further discussed hereinafter.

The movable suspension of the guide wheels 4 consists of a frame part 12a, 12b that is mounted against the cross girder 3b. A pivot pin 8a, 8b is mounted to said frame part 12a, 12b. The pivot arm 9a, 9b is rotatably journaled about the pivot pin 8a, 3b at the first end. At the second end the pivot arm 9a, 9b carries the guide wheel 4, which is connected to the pivot arm 9a, 9b for rotation about the pin 15.

In figure 5 the pivot arm 9b is shown in a position shifted along the axis of the pivot pin 8b so as to provide a better view of the details of the resilient element 7a, 7b. The resilient element consists of a spring 16 and a damping stop member 11. The spring 16 functions to urge the guide wheel 4 outward, i.e. away from the central longitudinal girder 3a, and to thus keep the guide wheel 4 in constant contact with the lateral surface of the support rail 2a, 2b. In the illustrated embodiment, a metal coil spring 16 is used for this purpose, but also other types of springs, for example leaf springs, or other materials may be used.

In conveying devices such as those according to the present invention a considerable force occurs in the longitudinal direction of the central longitudinal girders 3a. Said force is caused by the weight of chassis present in a sloping section of the conveying path or by conscious biasing of the chassis relative to the guide element. Said force is generally referred to as a biasing force.

When the chassis 3 rounds a bend, a significant transverse force is exerted on the chassis as a result of the biasing force, because the biasing forces on the coupling elements at the front and the rear of the chassis are not aligned. Said transverse force must be absorbed by the guide wheel 4, which is located on the inside of the bend at that moment. If the spring 16 is made stiff enough to withstand said force without being completely compressed, this may lead to a very large, constant pressing force of the guide wheels 4 against the support rails 2a, 2b. The adverse effects thereof are an increasing rolling resistance of the guide wheels 4 and thus an additional power requirement for driving the conveying device.

The damping stop member 11 ensures that the guide wheel cannot be pressed too far inward, i.e. toward the central longitudinal girder 3a. As a result, the spring 16 need not absorb the entire transverse force and can thus be less stiff. This limits the rolling resistance of the guide wheels 4 against the support rails 2a, 2b, and thus also the losses caused thereby.

The damping stop member 11 also functions to gradually intercept the pivot arm 9a, 9b. As a result of the aforesaid transverse force, the spring 16 will be completely compressed. In the absence of a damping stop member 11, the pivot arm 9a, 9b will come into direct contact with the suspension frame part 12a, 12b. This metal to metal contact leads to vibrations, noise and wear. Because of the presence of the damping stop member 11, the movement of the pivot arm 9a, 9b is decelerated, so that a gradual transfer of the transverse force of the spring 16 to the stop member 11 and thus to the frame part 12a, 12b is obtained.

Figure 4 shows the coupling elements 13 and 14 in more detail. The coupling element 13 comprises a pin that is fixed to the longitudinal girder 3a. The coupling element 14 comprises an eye that is fixed to the chassis, in which a spherical bearing is placed. When the coupling element 13 of a chassis is coupled to the bearing of the coupling element 14 of the chassis ahead thereof, an efficient connection between the two chassis is realised. The connection does not allow translation of one chassis relative to the other chassis, so that an adequate support of the end of the longitudinal girder 3a is obtained. Rotations of one chassis relative to the other chassis are possible in all directions, however so that the chassis can round horizontal and vertical bends.

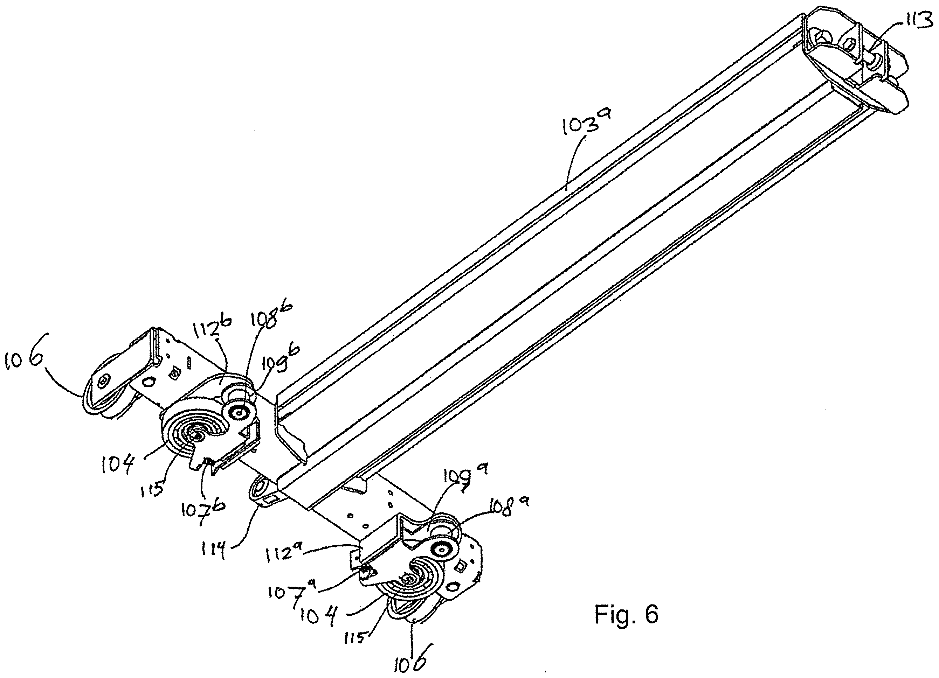

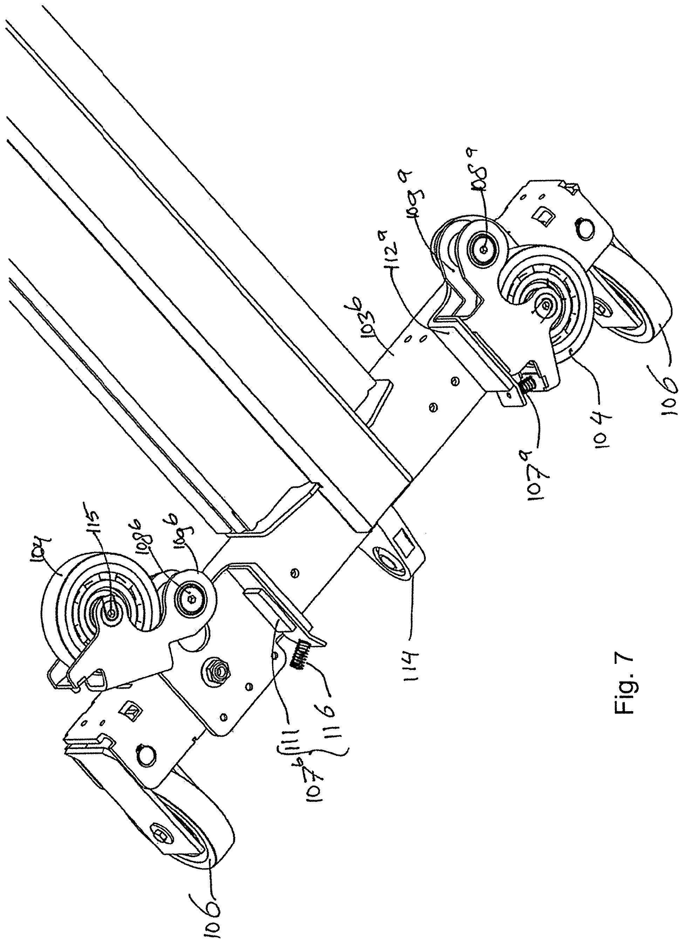

Figure 6 shows in isometric view a chassis 103, being a part of another preferred embodiment of a device according to the invention. In figures 6 and 7, parts having the same or an analogous function as parts of the chassis 3 are indicated by the same numerals augmented by 100. Figure 7 shows an isometric view the rear part of the chassis 103 of figure 6 in a different state. That is, one of the guide wheels 104 is shown in a position in which it has pivoted about the pivot pin 108b thereof. The chassis 103 of the carrier unit comprises a longitudinal girder 3a and a cross girder 3b that is rigidly connected to one end of the longitudinal girder.

The movable suspension of the guide wheels 104 consists of a frame part 112a, 112b, which can be mounted to the cross girder 103b. The pivot arm 109a, 109b is rotatably journaled about the pivot pin 108a, 108b at the first end thereof. At the second end, the pivot arm 109a, 109b carries the guide wheel 104, which is connected to the pivot arm 109a, 109b for rotation about the pin 115.

In figure 7 the pivot arm 109b 9b is shown in a position shifted along the axis of the pivot pin 108b so as to provide a better view of the details of the resilient element 107a, 107b. The resilient element consists of a spring 116 and a damping stop member 111. The spring 116 functions to urge the guide wheel 104 outward, i.e. away from the central longitudinal girder 103a, and to thus keep the guide wheel 104 in constant contact with the lateral surface of the support rail 102a, 102b. In the illustrated embodiment, a metal coil spring 116 is used for this purpose, but also other types of springs, for example leaf springs, or other materials may be used.

## Claims

1. A device (10) for conveying products, comprising successive carrier units and comprising conveying means for conveying the carrier units in a conveying direction along a conveying path, wherein the conveying means comprise two guide elements (2a, 2b) extending side by side along the conveying path for supporting the successive carrier units, wherein the conveying path comprises at least horizontal bends,
the carrier units each comprising:
- a chassis (3; 103) comprising a central longitudinal girder (3a; 103a) extending in the conveying direction and a cross girder (3b; 103b) extending transversely to the conveying direction, which is provided at the location of or at least near an end of the longitudinal girder (3a; 103a) and which is connected thereto,
- a respective running wheel (6; 106) rotatably provided on the cross girder (3b; 103b) on either side of the longitudinal girder (3a; 103a) for supporting the carrier unit on a respective guide element of the guide elements (2a, 2b) and for enabling the carrier unit to roll along the conveying path,
- a respective guide wheel (4; 104) rotatably provided on the cross girder (3b; 103b) on either side of the longitudinal girder (3a; 103a) for guiding the carrier unit in the transverse direction along a respective guide element of the guide elements (2a, 2b) during movement of the carrier unit along the conveying path,
- a support member supported by the chassis (3; 103), which comprises a supporting surface for supporting at least one product,
**characterised in that**
at least one guide wheel of the respective guide wheels (4; 104) provided on either side of the longitudinal girder (3a; 103a) is provided on the cross girder (3b; 103b) in such a manner that the guide wheel (4; 104) is movable to and fro in the transverse direction relative to the chassis (3; 103) and bears against the respective guide element (2a, 2b) under spring tension,
wherein the chassis (3; 103) of the carrier unit is provided with at least one stop element for each one of the aforesaid guide wheels (4; 104) that are movable in the transverse direction, which stop element comprises a damper (11; 111) and functions to limit movement in the transverse direction of said guide wheel (4; 104).

2. A device according to claim 1, wherein all the respective guide wheels (4; 104) provided on either side of the longitudinal girder (3a; 103a) are provided on the cross girder (3b; 103b) in such a manner that each guide wheel (4; 104) is movable to and fro in the transverse direction relative to the chassis (3; 103) and bears against the respective guide element (2a, 2b) under spring tension.

3. A device according to any one of the preceding claims, wherein the carrier unit comprises a resilient element that acts between the chassis (3; 103) and the at least one movable guide wheel (4; 104) for urging the guide wheel (4; 104) into rolling contact with the guide element (2a, 2b) in use.

4. A device according to claim 3, wherein the at least one movable guide wheel (4; 104) comprises a shaft member (15; 115) which is connected to the cross girder (3b; 103b) so as to be movable in the transverse direction, about which shaft member (15; 115) the wheel (4; 104) rotates in use, wherein the resilient element acts between the chassis (3; 103) and the shaft member (15).

5. A device according to claim 4, wherein the chassis (3; 103) has a pivot arm (9a, 9b; 109a, 109b) which pivotally connects the shaft member (15; 115) to the cross girder (3b; 103b), wherein the resilient element acts between the cross girder (3b; 103b) and the pivot arm (9a, 9b; 109a, 109b).

6. A device according to any one of the preceding claims, wherein the guide elements (2a, 2b) each have an upper surface over which a running wheel of the running wheels (6; 106) rolls in use and against a lateral surface of which a guide wheel of the guide wheels (4; 104) rolls.

7. A device according to any one of the preceding claims, wherein each carrier unit is provided with sorting means for moving a product present on the supporting surface in a direction substantially transversely to the conveying direction, and preferably also with a driving mechanism for driving the sorting means, wherein the device comprises control means for controlling individual driving mechanisms of individual carrier units.

8. A device according to any one of the preceding claims, wherein each carrier unit of the successive carrier units comprises coupling elements (13, 14; 113, 114) at both short ends, by means of which the respective carrier unit is coupled to adjacent ones of the successive carrier units.

9. A device according to claim 8, wherein each carrier unit is supported on the guide elements (2a, 2b) via its running wheels (6; 106) provided on the cross girder (3b; 103b) thereof and is furthermore suspended, via the coupling element (13; 113) provided at the end of the longitudinal girder (3a; 103a) opposite the end where the cross girder (3b; 103b) is provided, to the carrier unit of the successive carrier units that is located adjacent to said opposite end.

## Patentansprüche

1. Vorrichtung (10) zur Förderung von Produkten, umfassend aufeinander folgende Trägereinheiten und umfassend Fördermittel zum Fördern der Trägereinheiten in einer Förderrichtung entlang eines Förderpfads, wobei die Fördermittel zwei Führungselemente (2a, 2b), die sich Seite an Seite entlang des Förderpfads erstrecken, zum Stützen der aufeinander folgenden Trägereinheiten umfassen, wobei der Förderpfad zumindest horizontale Biegungen umfasst,
wobei die Trägereinheiten jeweils Folgendes umfassen:
- ein Gestell (3; 103), umfassend einen mittleren Längsträger (3a; 103a), der sich in der Förderrichtung erstreckt, und einen Querträger (3b; 103b), der sich quer zur Förderrichtung erstreckt, der am Ort von oder zumindest nahe einem Ende des Längsträgers (3a; 103a) bereitgestellt ist und der damit verbunden ist,
- ein entsprechendes Laufrad (6; 106), drehbar am Querträger (3b; 103b) auf jeder Seite des Längsträgers (3a; 103a) bereitgestellt, um die Trägereinheit auf einem entsprechenden Führungselement der Führungselemente (2a, 2b) zu stützen und der Trägereinheit zu ermöglichen, entlang des Förderpfads zu rollen,
- ein entsprechendes Führungsrad (4; 104), drehbar am Querträger (3b; 103b) auf jeder Seite des Längsträgers (3a; 103a) bereitgestellt, um die Trägereinheit während der Bewegung der Trägereinheit entlang des Förderpfads in der Querrichtung entlang eines entsprechenden Führungselements der Führungselemente (2a, 2b) zu führen,
- ein Trageelement, gestützt durch das Gestell (3; 103), das eine Trageoberfläche zum Tragen zumindest eines Produkts umfasst,
**dadurch gekennzeichnet, dass**
zumindest ein Führungsrad der entsprechenden Führungsräder (4; 104), die an jeder Seite des Längsträgers (3a; 103a) bereitgestellt sind, am Querträger (3b; 103b) in einer Weise bereitgestellt ist, dass das Führungsrad (4; 104) in der Querrichtung bezüglich des Gestells (3; 103) hin und her bewegbar ist und unter Federspannung am entsprechenden Führungselement (2a, 2b) anliegt,
wobei das Gestell (3; 103) der Trägereinheit mit zumindest einem Anschlagelement für jedes der erwähnten Führungsräder (4; 104), die in der Querrichtung bewegbar sind, bereitgestellt ist, wobei das Anschlagelement einen Dämpfer (11; 111) umfasst und dazu dient, Bewegung in der Querrichtung des Führungsrads (4; 104) zu begrenzen.

2. Vorrichtung nach Anspruch 1, wobei alle entsprechenden Führungsräder (4; 104), die an jeder Seite des Längsträgers (3a; 103a) bereitgestellt sind, am Querträger (3b; 103b) in einer Weise bereitgestellt sind, dass jedes Führungsrad (4; 104) in der Querrichtung bezüglich des Gestells (3; 103) hin und her bewegbar ist und unter Federspannung am entsprechenden Führungselement (2a, 2b) anliegt.

3. Vorrichtung nach einem der vorhergehenden Ansprüche, wobei die Trägereinheit ein elastisches Element umfasst, das zwischen dem Gestell (3; 103) und dem zumindest einen bewegbaren Führungsrad (4; 104) wirkt, um bei Verwendung das Führungsrad (4; 104) in rollenden Kontakt mit dem Führungselement (2a, 2b) zu zwingen.

4. Vorrichtung nach Anspruch 3, wobei das zumindest eine bewegbare Führungsrad (4; 104) ein Wellenelement (15; 115), das mit dem Querträger (3b; 103b) verbunden ist, um in der Querrichtung bewegbar zu sein, umfasst, wobei sich das Rad (4; 104) bei Verwendung um das Wellenelement (15; 115) dreht, wobei das elastische Element zwischen dem Gestell (3; 103) und dem Wellenelement (15) wirkt.

5. Vorrichtung nach Anspruch 4, wobei das Gestell (3; 103) einen Schwenkarm (9a, 9b; 109a, 109b) aufweist, der das Wellenelement (15; 115) schwenkend mit dem Querträger (3b; 103b) verbindet, wobei das elastische Element zwischen dem Querträger (3b; 103b) und dem Schwenkarm (9a, 9b; 109a, 109b) wirkt.

6. Vorrichtung nach einem der vorhergehenden Ansprüche, wobei die Führungselemente (2a, 2b) jeweils eine obere Oberfläche aufweisen, über die bei Verwendung ein Laufrad der Laufräder (6; 106) rollt und wobei gegen eine laterale Oberfläche derselben ein Führungsrad der Führungsräder (4; 104) rollt.

7. Vorrichtung nach einem der vorhergehenden Ansprüche, wobei jede Trägereinheit mit Sortiermitteln zum Bewegen eines auf der Trageoberfläche vorhandenen Produkts in eine Richtung im Wesentlichen quer zur Förderrichtung und vorzugsweise auch mit einem Antriebsmechanismus zum Antreiben der Sortiermittel bereitgestellt ist, wobei die Vorrichtung Steuermittel zum Steuern individueller Antriebsmechanismen von individuellen Trägereinheiten umfasst.

8. Vorrichtung nach einem der vorhergehenden Ansprüche, wobei jede Trägereinheit der aufeinander folgenden Trägereinheiten Kopplungselemente (13, 14; 113, 114) an beiden kurzen Enden umfasst, mittels denen die entsprechende Trägereinheit mit angrenzenden der aufeinander folgenden Trägereinheiten gekoppelt ist.

9. Vorrichtung nach Anspruch 8, wobei jede Trägereinheit auf den Führungselementen (2a, 2b) über ihre Laufräder (6; 106), bereitgestellt am Querträger (3b; 103b) davon, gestützt ist, und ferner, über das Kopplungselement (13; 113), bereitgestellt am Ende des Längsträgers (3a; 103a) gegenüber dem Ende, an dem der Querträger (3b; 103b) bereitgestellt ist, an der Trägereinheit der aufeinander folgenden Trägereinheiten aufgehängt ist, die sich angrenzend an das gegenüberliegende Ende befindet.

## Revendications

1. Dispositif (10) de transport de produits, comprenant des unités porteuses successives et comprenant des moyens de transport pour transporter les unités porteuses dans une direction de transport le long d'un chemin de transport, où les moyens de transport comprennent deux éléments de guidage (2a, 2b) s'étendant côte à côte le long du chemin de transport pour supporter les unités porteuses successives, où le chemin de transport comprend au moins des courbures horizontales,
les unités porteuses comprenant chacune :
- un châssis (3 ; 103) comprenant une poutre longitudinale centrale (3a ; 103a) s'étendant dans la direction de transport et une poutre transversale (3b ; 103b) s'étendant transversalement à la direction de transport, qui est prévue à l'emplacement ou au moins à proximité d'une extrémité de la poutre longitudinale (3a ; 103a) et qui lui est reliée,
- une roue de roulement respective (6 ; 106) prévue de manière rotative sur la poutre transversale (3b ; 103b) de chaque côté de la poutre longitudinale (3a ; 103a) pour supporter l'unité porteuse sur un élément de guidage respectif des éléments de guidage (2a, 2b) et pour permettre à l'unité porteuse de rouler le long du chemin de transport,
- une roue de guidage respective (4 ; 104) prévue de manière rotative sur la poutre transversale (3b ; 103b) de chaque côté de la poutre longitudinale (3a ; 103a) pour guider l'unité porteuse dans la direction transversale le long d'un élément de guidage respectif des éléments de guidage (2a, 2b) pendant le mouvement de l'unité porteuse le long du chemin de transport,
- un organe de support supporté par le châssis (3 ; 103), qui comprend une surface de support pour supporter au moins un produit,
**caractérisé en ce que**
au moins une roue de guidage des roues de guidage respectives (4 ; 104) prévues de chaque côté de la poutre longitudinale (3a ; 103a) est prévue sur la poutre transversale (3b ; 103b) de telle sorte que la roue de guidage (4 ; 104) puisse effectuer un mouvement de va-et-vient dans la direction transversale par rapport au châssis (3 ; 103) et s'appuie contre l'élément de guidage respectif (2a, 2b) sous la tension d'un ressort,
dans lequel le châssis (3 ; 103) de l'unité porteuse est pourvu d'au moins un élément de butée pour chacune des roues de guidage susmentionnées (4 ; 104) qui sont mobiles dans la direction transversale, lequel élément de butée comprend un amortisseur (11 ; 111) et a pour fonction de limiter le mouvement dans la direction transversale de ladite roue de guidage (4 ; 104).

2. Dispositif selon la revendication 1, dans lequel toutes les roues de guidage respectives (4; 104) prévues de part et d'autre de la poutre longitudinale (3a ; 103a) sont prévues sur la poutre transversale (3b ; 103b) de telle sorte que chaque roue de guidage (4; 104) puisse effectuer un mouvement de va-et-vient dans la direction transversale par rapport au châssis (3; 103) et s'appuie contre l'élément de guidage respectif (2a, 2b) sous la tension d'un ressort.

3. Dispositif selon l'une quelconque des revendications précédentes, dans lequel l'unité porteuse comprend un élément élastique qui agit entre le châssis (3; 103) et l'au moins une roue de guidage mobile (4; 104) pour solliciter la roue de guidage (4; 104) en contact roulant avec l'élément de guidage (2a, 2b) en cours d'utilisation.

4. Dispositif selon la revendication 3, dans lequel l'au moins une roue de guidage mobile (4 ; 104) comprend un organe d'arbre (15 ; 115) qui est relié à la poutre transversale (3b ; 103b) de manière à être mobile dans le direction transversale, autour duquel organe d'arbre (15 ; 115) la roue (4 ; 104) tourne en cours d'utilisation, où l'élément élastique agit entre le châssis (3; 103) et l'organe d'arbre (15).

5. Dispositif selon la revendication 4, dans lequel le châssis (3 ; 103) a un bras pivotant (9a, 9b ; 109a, 109b) qui relie en pivotement l'organe d'arbre (15 ; 115) à la poutre transversale (3b ; 103b), où l'élément élastique agit entre la poutre transversale (3b ; 103b) et le bras pivotant (9a, 9b ; 109a, 109b).

6. Dispositif selon l'une quelconque des revendications précédentes, dans lequel les éléments de guidage (2a, 2b) ont chacun une surface supérieure sur laquelle une roue de roulement des roues de roulement (6 ; 106) roule en cours d'utilisation et contre une surface latérale de laquelle roule une roue de guidage des roues de guidage (4 ; 104).

7. Dispositif selon l'une quelconque des revendications précédentes, dans lequel chaque unité porteuse est pourvue de moyens de tri pour déplacer un produit présent sur la surface de support dans une direction sensiblement transversale à la direction de transport, et de préférence également d'un mécanisme d'entraînement pour entraîner les moyens de tri, où le dispositif comprend des moyens de commande pour commander des mécanismes d'entraînement individuels d'unités porteuses individuelles.

8. Dispositif selon l'une quelconque des revendications précédentes, dans lequel chaque unité porteuse des unités porteuses successives comprend des éléments de couplage (13, 14 ; 113, 114) au niveau de deux extrémités courtes, au moyen desquels l'unité porteuse respective est couplée à des unités adjacentes des unités porteuses successives.

9. Dispositif selon la revendication 8, dans lequel chaque unité porteuse est supportée sur les éléments de guidage (2a, 2b) par l'intermédiaire de ses roues de roulement (6 ; 106) prévues sur la poutre transversale (3b ; 103b) de ceux-ci et est en outre suspendue, par l'intermédiaire de l'élément de couplage (13 ; 113) prévu au niveau de l'extrémité de la poutre longitudinale (3a ; 103a) opposée à l'extrémité où la poutre transversale (3b ; 103b) est prévue, à l'unité porteuse des unités porteuses successives qui est située à côté de ladite extrémité opposée.
